# EUROPÄISCHE PATENTANMELDUNG

(11) **EP 2 453 225 A2**
(43) Veröffentlichungstag der Anmeldung: **16.05.2012**
(21) Anmeldenummer: 11193830.4
(22) Anmeldetag: 15.12.2011
(51) Int. Cl.: G01N 21/90

(54) **Verfahren und System zum Prüfen von mit einer Gasbarriere-Schicht versehenen Gegenständen**

(71) Anmelder: Finatec Holding AG, 2555 Brügg bei Biel (CH)
(72) Erfinder: Schärer, Matthias, 3270 Aarberg (CH); Kubalek, Bernhard, 3302 Moosseedorf (CH); Maibach, Fridolin, 2560 Nidau (CH)
(74) Vertreter: BOVARD AG

(57) **Zusammenfassung**

Die vorliegende Erfindung betrifft ein Verfahren und das entsprechende System zum Prüfen von mit einer Gasbarriere-Schicht versehenen Gegenständen (5), welche aus mindestens einer Grundschicht aus einem ersten Material, beispielsweise Polyethylen oder Polypropylen und mindestens einer Gasbarriere-Schicht aus einem anderen Material, beispielsweise EVA oder EVOH bestehen. Dabei wird mittels eines Bildaufnahmemoduls (6) ein Abbild von jedem Gegenstand (5) aufgenommen und durch ein Verarbeitungsmodul (7) derart verarbeitet, dass defekte Gegenstände (5) entdeckt und ausgeschieden werden. Konkret wird durch das Bildaufnahmemodul (6) das Abbild jedes Gegenstandes (5) im Bereich des unsichtbaren Lichts gemacht, und das aufgenommene Abbild danach durch das Verarbeitungsmodul (7) untersucht, wobei das Vorhandensein, das Fehlen oder die Dicke der Gasbarriere-Schicht auf Grund des Abbilds ermittelt wird.

## Beschreibung

### Sachgebiet der Erfindung

Die vorliegende Erfindung bezieht sich auf ein Verfahren und ein entsprechendes System zum Prüfen von mit einer Gasbarriere-Schicht versehenen Gegenständen. Insbesondere bezieht sich die vorliegende Erfindung auf ein Verfahren und ein entsprechendes System zum Prüfen von mit einer Gasbarriere-Schicht versehenen Gegenständen, welche aus mindestens einer Grundschicht aus einem ersten Material und mindestens einer Gasbarriere-Schicht aus einem anderen Material bestehen, wobei mittels eines Bildaufnahmemoduls ein Abbild von jedem Gegenstand aufgenommen und durch ein Verarbeitungsmodul derart verarbeitet wird, dass defekte Gegenstände entdeckt und ausgeschieden werden.

### Stand der Technik

Frische Getränke (zum Beispiel frische Milch oder gepresste Fruchtsäfte) werden heute sehr oft in Kunststoffbehältern auf dem Markt angeboten. Solche Behälter sind häufig in der Form einer Flasche mit einem entsprechenden Schraubdeckel. Als Materialien für die Herstellung solcher Kunststoffbehälter eignen sich insbesondere Polypropylen (PP) oder Polyethylen (PE), wobei auch viele andere Materialien wie zum Beispiel PET (Polyethylenterephthalat) durchaus verwendet werden können. Dieselben Materialien werden üblicherweise auch für die Herstellung von Schraubdeckeln verwendet. Bei gewissen anderen Produkten werden Dosen bereitgestellt, welche durch auf die Öffnung passend aufsetzbare Deckel abgeschlossen werden. Solche Deckel werden oft als "Schnappdeckel" bezeichnet, weil sie mit dem Flansch der Behälteröffnung einen Schnappverschluss bilden.

Bei solchen Frischprodukten ist es besonders wichtig, dass sie vom Zeitpunkt der Verpackung bis zum Zeitpunkt des Konsums im einwandfreien Zustand bleiben können. Es hat sich insbesondere gezeigt, dass ein Kontakt der Produkte mit dem Sauerstoff aus der Umgebungsluft sehr schnell zu diversen Reaktionen und demzufolge zu einer negativen Veränderung der frischen Nahrungsmittel führt. Obwohl viele dieser Änderungen die Essbarkeit der Produkte nicht wirklich beeinträchtigen, so führen sie doch zu einer erheblichen Geschmacks-, Geruchs-, Farb- oder Konsistenzveränderung, was sich auf den Verkauf solcher Produkte negativ auswirkt.

Weil die klassischen Schraubendeckel für Kunststoffflaschen oder Schnappdeckel für Dosen typischerweise nicht luftdicht sind, sind schon diverse Massnahmen vorgeschlagen worden, um eine luftdichte Verschliessung dieser frischen Nahrungsmittel zu gewährleisten. Eine der am häufigsten eingesetzten Massnahmen ist eine luftdichte Versiegelung der Behälteröffnung, welche vor dem Konsum zuerst entfernt werden muss. Zu diesem Zweck wird typischerweise eine aluminiumhaltige Folie eingesetzt, dessen Enden durch ein besonderes Lötverfahren an der Öffnung des Behälters luftdicht angebracht werden. Danach wird der Behälter noch durch den Schraubendeckel abgeschlossen. Allerdings birgt eine solche zusätzliche Folie zahlreiche Nachteile, insbesondere weil der Verpackungsprozess bei solchen Behältern durch die Zufügung eines zusätzlichen Schritts erschwert und damit auch verteuert wird. Aber auch für die Konsumenten ist eine solche Verschliessung mit Nachteilen verbunden, weil die Nahrungsmittel nicht konsumiert werden können, bevor der Schutzfilm entfernt wird. Zudem entfällt der Luftschutz nach dem Entfernen der Schutzfolie vollständig, so dass nicht ganz aufgebrachte Nahrungsmittel nicht mehr sehr lange aufbewahrt werden können.

Ethylen-Vinylalkohol-Copolymer (EVOH) ist ein Material, oder eine Gruppe von Materialien, welche sich ausgezeichnet zur luftdichten Versiegelung eignen, weil sie hervorragende Gasbarrieren-Eigenschaften besitzen. Zudem sind EVOH-Copolymere gegen Öle und organische Lösungsmittel widerstandsfähig und können ausserdem sehr einfach auf andere Kunststoffe aufgebracht werden, mit welchem sie feste Verbunde bilden. Diese vorteilhaften Eigenschaften haben dazu geführt, EVOH in der Verpackungsindustrie, besonders im Bereich der medizinischen, pharmazeutischen und kosmetischen Waren zu verwenden. Ausserdem hat man kürzlich angefangen, bei den aus herkömmlichen Kunststoffen hergestellten Schraubendeckeln entweder eine EVOH-Beschichtung oder eine EVOH-Zwischenschicht zu bilden. Eine solche zusätzliche EVOH-Schicht führt nämlich dazu, dass eine luftdichte Verschliessung von Behältern ausschliesslich durch den Deckel ermöglicht wird, wodurch zusätzliche Schutzfilme vollkommen entfallen. Auf diese Weise können auch die Verpackungsprozesse vereinfacht werden, wodurch die Produkte wesentlich billiger angeboten werden können. Auch bieten solche Deckel den Schutz gegen die Umgebungsluft auch nach der Öffnung der Behälter, was bei den herkömmlichen Methoden nicht gewährleistet werden kann.

Allerdings darf für eine zuverlässige Luftverschliessung die EVOH-Schicht keinerlei Lücken aufweisen. Lücken in der EVOH-Schicht können nämlich dazu führen, dass die Umgebungsluft trotz des Verschlusses in den Behälter gelingen kann, wodurch die oben beschriebenen Probleme in Bezug auf die Veränderung der frischen Produkte entstehen. Nun ist es aber so, dass zurzeit leider noch keine zufriedenstellenden Prüfverfahren existieren, mittels welchen Schraubendeckels mit einer EVOH-Schicht im industriellen Masse geprüft werden können. EVOH-Schichten können nämlich optisch nicht von den Deckeln unterschieden werden, wodurch ein Prüfen solcher beschichteten Schraubendeckel mit Hilfe von klassischen Inspektionsverfahren gar nicht möglich ist. Aus diesem Grund ist ein breiter Einsatz von solchen Deckeln leider noch nicht vorhanden.

### Zusammenfassung der Erfindung

Es ist daher eine Aufgabe der Erfindung, ein Verfahren zum Prüfen von mit einer Gasbarriere-Schicht versehenen Gegenständen sowie ein zur Durchführung dieses Verfahrens geeignetes System vorzuschlagen, bei welchen die Nachteile der bekannten Verfahren und Systeme überwunden, zumindest aber stark vermindert sind.

Insbesondere ist eine Aufgabe der Erfindung, ein Verfahren und das entsprechende System zum Prüfen von mit einer Gasbarriere-Schicht versehenen Gegenständen anzubieten, dank welchen eine zuverlässige, schnelle und einfache automatische Kontrolle gewährleistet ist. Ausserdem sollen die fehlerhaften Gegenstände auch automatisiert ausgeschieden werden können.

Gemäss der vorliegenden Erfindung werden diese Ziele insbesondere durch die Elemente der beiden unabhängigen Ansprüche erreicht. Weitere vorteilhafte Ausführungsformen gehen zu dem aus den abhängigen Ansprüchen und der Beschreibung hervor.

Insbesondere werden diese Ziele der Erfindung dadurch erreicht, dass im Verfahren zum Prüfen von mit einer Gasbarriere-Schicht versehenen Gegenständen, welche aus mindestens einer Grundschicht aus einem ersten Material und mindestens einer Gasbarriere-Schicht aus einem zweiten Material bestehen, wobei mittels eines Bildaufnahmemoduls ein Abbild von jedem Gegenstand aufgenommen und durch ein Verarbeitungsmodul derart verarbeitet wird, dass defekte Gegenstände entdeckt und ausgeschieden werden, durch das Bildaufnahmemodul das Abbild jedes Gegenstandes im Bereich des unsichtbaren Lichts gemacht wird und das aufgenommene Abbild durch das Verarbeitungsmodul untersucht wird, wobei das Vorhandensein, das Fehlen oder die Dicke der Gasbarriere-Schicht auf Grund des Abbilds ermittelt wird.

Der Vorteil dieser Erfindung liegt insbesondere darin, dass die mit einer Gasbarriere-Schicht versehenen Gegenstände einer Bildprüfung im Bereich des unsichtbaren Lichts unterzogen werden, wodurch die im Bereich des unsichtbaren Lichts erkennbaren, aber bei sichtbaren Licht nicht auffindbaren Fehler in der Gasbarriere-Schicht entdeckt werden können. Da das Material des Körpers (bzw. der Grundschicht) des Gegenstands und das Material der Gasbarriere-Schicht typischerweise die gleiche Farbe aufweisen, können sie mittels einer Bildverarbeitung im Bereich des sichtbaren Lichts wie oben angedeutet gar nicht oder nur schwer und unpräzise voneinander unterschieden werden. Eine Analyse im Bereich des unsichtbaren Lichts löst dieses Problem und bietet ein zuverlässiges Prüfverfahren an.

In einer Ausführungsform der vorliegenden Erfindung werden das erste Material der Grundschicht und das zweite Material der Gasbarriere-Schicht derart ausgewählt, dass sie im Bereich des unsichtbaren Lichts ein unterschiedliches Abbild ergeben. Beispielsweise kann ein erstes Material im erfassten Abbild in einer ersten Farbe erscheinen, während das Vorhandensein eines anderen Materials durch eine andere Farbe repräsentiert wird. Bereiche, in welchen beide Materialien festgestellt werden können, erhalten somit im aufgenommenen Abbild eine Farbe, welche zum Beispiel durch die Mischung der beiden anderen Farben entsteht. Selbstverständlich ist es aber auch ohne weiteres möglich, die verschiedenen Schichten durch dieselbe Farbe darzustellen, indem beispielsweise verschiedene Farbtöne, Helligkeiten oder Kontraste verwendet werden. Diese Ausführungsform hat unter anderem den Vorteil, dass das unterschiedliche Abbild des ersten Materials und des zweiten Materials im Bereich des unsichtbaren Lichts zu einer einfachen Untersuchung des Vorhandenseins der Gasbarriere-Schicht verwendet werden kann. Auf diese Weise können auch die Bildverarbeitungsalgorithmen relativ simpel gehalten werden, wodurch eine schnellere Verarbeitung möglich wird.

In einer anderen Ausführungsform der vorliegenden Erfindung wird das Abbild des Gegenstands auf vorbestimmte Wellenlängen untersucht, wobei diese Wellenlängen in Abhängigkeit vom ersten Material des Körpers und vom zweiten Material der Gasbarriere-Schicht ausgewählt werden. Der Vorteil dieser Ausführungsform liegt insbesondere darin, dass die Untersuchung des Abbilds auf die Untersuchung der vorbestimmten Wellenlängen reduziert werden kann, wodurch eine noch einfachere und noch schnellere Verarbeitung ermöglicht wird. Da gezeigt werden kann, dass verschiedene Kunststoffmaterialien oft verschiedene Wellenlängen im Bereich des unsichtbaren Lichts reflektieren, kann eine sehr präzise Unterscheidung verschiedenen Materialien ohne einen sehr grossen Aufwand gemacht werden.

In einer weiteren Ausführungsform ist das Bildaufnahmemodul eine im Bereich der Infrarotstrahlung sensible Kamera. Der Vorteil dieser Ausführungsform liegt insbesondere darin, dass nun ein im Beriech des Infrarotlichts gemachtes Abbild der mit einer Gasbarriere-Schicht Gegenstände verwendet werden kann. Infrarotkameras werden heutzutage in verschiedenen technischen Bereichen eingesetzt, sodass deren Verwendung mittlerweile einfach und kostengünstig erreicht werden kann. Zudem lässt sich zeigen, dass die verschiedenen Kunststoffe insbesondere im Bereich der Infrarotstrahlung ganz spezifische Reflexionsmuster aufweisen, wodurch das Prüfen einer Gasbarriere-Schicht aus einem Material, das sich vom Material des Körpers des Gegenstandes unterscheidet, in diesem Bereich speziell gute Resultate liefert.

In einer wieder anderen Ausführungsform der vorliegenden Erfindung wird beim Ermitteln eines fehlerhaften Gegenstands dieser Gegenstand durch ein Aussonderungsmodul aufgrund eines Signals vom Verarbeitungsmodul ausgesondert. Der Vorteil dieser Ausführungsform liegt insbesondere darin, dass die fehlerhaften Gegenstände auf eine automatisierte Weise ausgesondert werden können, wodurch der Prüfprozess besonders effizient und kostengünstig gestaltet werden kann.

In einer anderen Ausführungsform der vorliegenden Erfindung werden die Gegenstände durch eine Fördereinrichtung vor dem Bildaufnahmemodul derart transportiert werden, dass ein Abbild von jedem Gegenstand aufgenommen wird. Der Vorteil dieser Ausführungsform liegt unter anderem darin, dass die zu prüfenden Gegenstände durch eine Fördereinrichtung bewegt werden können, während die sensiblen Elemente des Systems wie zum Beispiel das Bildaufnahmemodul fixiert werden können. Auf diese Weise wird einerseits die Wahrscheinlichkeit von Pannen verkleinert und auf der anderen Seite wird auch die Präzision bei den Aufnahmen der Abbilder der zu prüfenden Gegenstände erhöht.

In einer nochmals anderen Ausführungsform der vorliegenden Erfindung ist ein Bestrahlungselement vorgesehen, mittels welchem die Gegenstände durch die Infrarotstrahlung bestrahlt werden. Diese Ausführungsform hat insbesondere den Vorteil, dass die zu prüfenden mit einer Gasbarriere-Schicht versehenen Gegenstände durch eine externe Infrarotquelle bestrahlt werden, so dass die verschiedenen Materialien der Grundschicht und der Gasbarriere-Schicht diese Strahlen reflektieren können. Da, wie bereits erwähnt, verschiedene Kunststoffe verschiedene Wellenlängen im Infrarotbereich reflektieren, kann aufgrund der im Abbild aufgenommenen Wellenlängen sehr einfach auf das Vorhandensein beziehungsweise das Fehlen, oder aber auf die Dicke der Gasbarriere-Schicht geschlossen werden. Durch die Anpassung der Bestrahlungsintensität kann zudem den verschiedenen Formen beziehungsweise Dimensionen der zu prüfenden beschichteten Gegenstände sehr einfach Rechnung getragen werden.

In einer anderen Ausführungsform der vorliegenden Erfindung ist ein Wärmeelement vorgesehen, mittels welchem die Gegenstände derart erwärmt werden, dass sie eine Eigenstrahlung im Infrarotbereich entwickeln. Das Wärmeelement kann dabei anstelle des Bestrahlungselements oder neben dem Bestrahlungselement eingesetzt werden. Der Vorteil dieser Ausführungsform der vorliegenden Erfindung liegt insbesondere darin, dass zur Aufnahme des Abbilds der mit einer Gasbarriere-Schicht versehenen Gegenstände ihre Eigenstrahlung verwendet werden kann. Da die Infrarotstrahlung im Wesentlichen der Wärmestrahlung entspricht, können verschiedene Temperaturen der Körper durch eine entsprechende Aufnahmeeinheit aufgenommen werden. Da gezeigt werden kann, dass sich verschiedenen Kunststoffe bei einer zeitlich begrenzten Erwärmung unterschiedlich schnell erwärmen, ist leicht nachvollzuziehen, dass sie auch unterschiedliche Wärmebilder ergeben. Dank dieser Eigenschaft können wiederum die verschiedenen Materialien voneinander unterschieden werden, was zu einer einfachen und zuverlässigen Prüfung von Gegenständen verwendet werden kann.

Das erste Material der Grundschicht der zu prüfenden Gegenstände kann typischerweise Polypropylen und/oder Polyethylen sein, während das zweite Material der Gasbarriere-Schicht typischerweise das Ethylenvinylacetat (EVA) und/oder Ethylen-Vinylalkohol-Copolymer (EVOH) ist. Selbstverständlich sind aber auch andere geeigneten Materialien möglich, solange sie im aufgenommenen Abbild im Bereich des unsichtbaren Lichts ein unterschiedliches Muster ergeben.

An dieser Stelle soll erwähnt werden, dass sich die vorliegende Erfindung neben dem beschriebenen erfindungsgemässen Verfahren zum Prüfen von mit einer Gasbarriere-Schicht versehenen Gegenständen auch auf ein entsprechendes System zum Prüfen von mit einer Gasbarriere-Schicht versehenen Gegenständen bezieht.

### Kurze Beschreibung der Zeichnungen

Nachfolgend werden Ausführungsformen der vorliegenden Erfindung anhand von Beispielen beschreiben. Die Beispiele der Ausführungen werden durch folgende beigelegten Figuren illustriert:
Figur 1 zeigt schematisch eine blockartige Darstellung eines Systems zum Prüfen von mit einer Gasbarriere-Schicht versehenen Gegenständen gemäss einer ersten Ausführungsform der vorliegenden Erfindung, von der Seite gesehen.
Figur 2 zeigt einen vergrösserten Ausschnitt aus der Figur 1, wo dieser durch einen Kreis dargestellt ist.
Figur 3 zeigt schematisch eine blockartige Darstellung eines Systems zum Prüfen von mit einer Gasbarriere-Schicht versehenen Gegenständen gemäss einer zweiten Ausführungsform der vorliegenden Erfindung, von der Seite gesehen.
Figur 4 zeigt einen vergrösserten Ausschnitt aus der Figur 3, wo dieser durch einen Kreis dargestellt ist.

### Detaillierte Beschreibung der Ausführungsformen

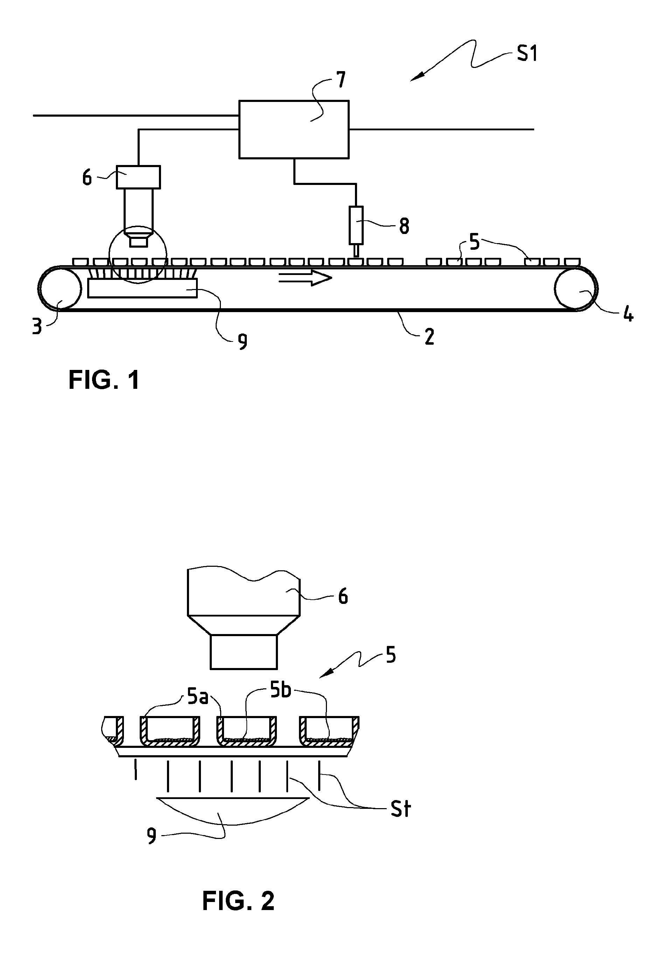

In Figur 1 wird schematisch und blockartig ein System S1 zum Prüfen von mit einer Gasbarriere-Schicht versehenen Gegenständen 5 illustriert, welches zur Realisierung des Verfahrens gemäss einer ersten Ausführungsvariante der vorliegenden Erfindung verwendet werden kann. Die zu prüfenden Gegenstände 5 sind typischerweise aus Kunststoff hergestellte Schraubendeckel, durch welche Behälter für Flüssigkeiten (z.B. Flaschen) abgeschlossen werden können. Diese Erfindung ist aber selbstverständlich nicht auf solche Schraubendeckel beschränkt und sie bezieht sich gleichwohl auf viele andere mit einer Gasbarriere-Schicht versehenen Gegenstände 5, welche eine ähnliche Struktur aufweisen, zum Beispiel Schnappdeckel für Dosen. Selbstverständlich ist es auch durchaus denkbar, Gegenstände 5 zu Prüfen, welche überhaupt keine Verschlüsse sind, sondern bei welchen einfach gute Gasbarriere-Eigenschaften verlangt werden.

Das System S1 umfasst im Wesentlichen eine Fördereinrichtung 2, durch welche die mit einer Gasbarriere-Schicht versehenen Gegenstände 5 transportiert werden können. Die Fördereinrichtung 2 kann beispielsweise als ein Förderband mit den entsprechenden Antriebseinrichtungen 3, 4 ausgebildet werden, auf welches die zu prüfenden Gegenstände 5 gestellt werden. Die Gegenstände 5 können dabei sowohl manuell als auch durch dazu geeignete Einrichtungen auf die Fördereinrichtung 2 gebracht werden. Insbesondere ist es auch denkbar, die zu prüfenden mit einer Gasbarriere-Schicht versehenen Gegenstände 5 unmittelbar von der Herstellungsanlage auf die Fördereinrichtung 2 zu bringen, so dass vor ihrer Weiterleitung automatisch auf Fehler geprüft werden können.

Nach der erfolgten Prüfung im System S1 werden die fehlerhaften mit einer Gasbarriere-Schicht versehenen Gegenstände 5 automatisch aussortiert. Hierzu ist ein Aussonderungsmodul 8 vorgesehen, welches die defekten Gegenstände 5 von der Fördereinrichtung 2 entfernt. Diese Aussonderung kann zum Beispiel durch einen kurzen, gezielten Druckluftstoss erfolgen, wobei die defekten mit einer Gasbarriere-Schicht versehenen Gegenstände 5 von der Fördereinrichtung 2 weggeblasen und anschliessend auf eine geeignete Weise entsorgt werden. Es ist aber auch durchaus möglich, andersartige Aussonderungsmodule 8 vorzusehen, durch welche die fehlerhaften mit einer Gasbarriere-Schicht versehenen Gegenstände 5 ausgesondert werden können. Hierzu müssen jedoch die Anforderungen im Bezug auf die Geschwindigkeit, Sicherheit und Effizienz erfüllt werden. Diejenigen Gegenstände 5, welche die Prüfung erfolgreich bestehen, werden hingegen durch die Fördereinrichtung 2 weitertransportiert und verlassen anschliessend das System S1. Am Ausgang des Systems S1 können selbstverständlich Vorrichtungen angebracht werden, welche die geprüften Gegenstände 5 weitertransportieren, beispielsweise in eine Bedruckungs-, Reinigungs- oder eine andere Anlage. Solche weiteren Elemente sind jedoch bereits bekannt und beeinträchtigen die vorliegende Erfindung nicht. Aus diesem Grund werden sie auch nicht näher beschrieben.

Die Prüfung der mit einer Gasbarriere-Schicht versehenen Gegenstände 5 im System S1 erfolgt grundsätzlich dadurch, dass von jedem Gegenstand 5 ein Abbild im Bereich des unsichtbaren Lichts gemacht wird, und dass dieses aufgenommene Abbild anschliessend untersucht wird, um die Fehler in den Gegenständen 5 festzustellen. Die Fehler, welche man insbesondere entdecken möchte, beziehen sich auf die Qualität der Gasbarriere-Schicht, d.h. vor allem das Vorhandensein oder das Fehlen, aber nicht zuletzt auch auf die Dicke und Ebenheit dieser Gasbarriere-Schicht 5b. Es ist nämlich so, dass eine lückenlose Gasbarriere-Schicht 5b ein wesentlicher Qualitätsfaktor beispielsweise bei der Herstellung von luftdichten Schraubendeckeln 5 ist, weswegen eine zuverlässige Prüfung der Beschichtung 5b extrem wichtig ist.

Das Abbild jedes Gegenstandes 5 im System S1 wird durch ein Bildaufnahmemodul 6 gemacht. Das Bildaufnahmemodul 6 ist typischerweise eine im Bereich der Infrarotstrahlung sensible Kamera. Als Infrarotstrahlung wird generell die Strahlung im Spektralbereich zwischen 780 nm und 1 mm bezeichnet, was einem Frequenzbereich von 300 GHz bis 400 THz entspricht. Solche Kameras sind also in der Lage, verschiedene für das menschliche Auge unsichtbare Strahlen zu registrieren, wobei verschiedene Wellenlängen im aufgenommenen Abbild unterschiedlich dargestellt werden. Da verschiedene Gegenstände sowie verschiedene Materialien normalerweise verschiedene Wellenlängen im unsichtbaren Bereich reflektieren, kann die Auswertung eines durch das Bildaufnahmemodul 6 aufgenommenes Abbild eines mit einer Gasbarriere-Schicht versehenen Gegenstandes 5 zur Prüfung seiner Eigenschaften verwendet werden.

Hierzu wird das durch das Bildaufnahmemodul 6 aufgenommene Abbild des zu prüfenden mit einer Gasbarriere-Schicht versehenen Gegenstandes 5 an ein Verarbeitungsmodul 7 übermittelt, wo die Auswertung des Abbilds durchgeführt wird. Zur Auswertung können verschiedene Algorithmen verwendet werden, welche sich die Tatsache zu Nutze machen, dass verschiedene Materialien im Bereich des unsichtbaren Lichts wie oben erwähnt jeweils ein klar voneinander unterscheidbares Abbild ergeben. Nachdem ein fehlerhafter Gegenstand 5 durch das Verarbeitungsmodul 7 entdeckt worden ist, wird vom Verarbeitungsmodul 7 ein Kontrollsignal an das Aussonderungsmodul 8 abgegeben, wodurch der defekte Gegenstand 5 ausgesondert werden kann.

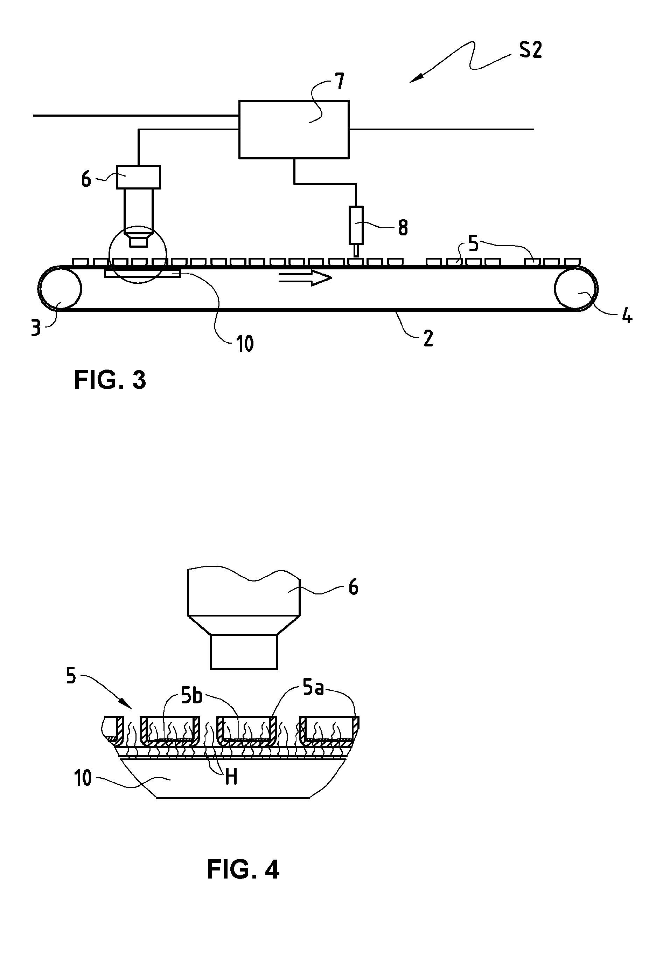

Figur 3 zeigt ein System S2, welches praktisch die gleiche Struktur aufweist wie das bereits beschriebene System S1. Es umfasste ebenfalls eine Fördereinrichtung (beispielsweise ein Förderband 2) mit den entsprechenden Antriebseinrichtungen 3, 4, ein Bildaufnahmemodul 6, ein Verarbeitungsmodul 7 und ein Aussonderungsmodul 8. Auch im System S2 werden die zu prüfenden mit einer Gasbarriere-Schicht versehenen Gegenstände 5 durch die Fördereinrichtung 2 vor dem Bildaufnahmemodul 6 geführt, so dass ein entsprechendes Abbild im Bereich des unsichtbaren Lichts gemacht werden kann. Auch im System S2 (welches einer zweiten Ausführungsform der vorlegenden Erfindung entspricht) werden die aufgenommenen Abbilder der zu prüfenden mit einer Gasbarriere-Schicht versehenen Gegenstände 5 an das Verarbeitungsmodul 7 übermittelt, wo sie entsprechend ausgewertet werden, und wo nach Ermitteln von fehlerhaften Gegenständen 5 diese dank einem entsprechenden Aussonderungssignal durch das Aussonderungsmodul 8 aus dem System S2 entfernt werden können.

Die oben beschriebene erste Ausführungsform der vorliegenden Erfindung, d.h. das System zum Prüfen von mit einer Gasbarriere-Schicht versehenen Gegenständen S1, und die zweite Ausführungsform der vorliegenden Erfindung, d.h. das System zum Prüfen von mit einer Gasbarriere-Schicht versehenen Gegenständen S2, unterscheiden sich hauptsächlich darin, wie das Abbild im Bereich des unsichtbaren Lichts gemacht wird.

Gemäss der ersten Ausführungsform der vorliegenden Erfindung werden die zu prüfenden mit einer Gasbarriere-Schicht versehenen Gegenstände 5 durch eine externe Infrarotstrahlung St bestrahlt. Hierzu ist ein Bestrahlungselement 9 vorgesehen, welches derart angeordnet ist, dass es die zu prüfenden Gegenstände 5 bestrahlen kann.

Figur 2 zeigt einen vergrösserten Ausschnitt aus der Figur 1, welcher in Figur 1 durch einen Kreis gekennzeichnet ist. In Figur 2 sieht man die zu prüfenden mit einer Gasbarriere-Schicht versehenen Gegenstände 5, bei welchen man klar den Gegenstandskörper (die Grundschicht) 5a und die Gasbarriere-Schicht 5b erkennen kann. Die Grundschichten 5a der Gegenstände 5 werden herkömmlicherweise aus einem Kunststoff hergestellt, welcher für die Herstellung von Schraubendeckeln, Schnappdeckeln und ähnlichen Gegenständen geeignet ist. Typischerweise wird es sich um Polypropylen (PP) oder aber Polyethylen (PE) handeln, wobei aber selbstverständlich auch ganz viele andere Kunststoffe denkbar sind. Die Gasbarriere-Schicht 5b in den Gegenständen 5 wird typischerweise aus einer Ethylen-Vinylalkohol-Copolymer (EVOH)-Schicht bestehen. Wie bereits erwähnt haben die EVOH-Copolymere hervorragende Eigenschaften, welche sie zur luftdichten Verschliessung von Behältern besonders eignen. Weil aber ausschliesslich eine lückenlose Gasbarriere-Schicht 5b einen optimalen Luftschutz bietet, ist es von grösster Bedeutung, die fehlerhaften Gegenstände 5 möglichst effizient und zuverlässig zu bestimmen.

Obwohl in Figur 2 die Gasbarriere-Schicht 5b als eine Beschichtung auf der Oberfläche der zu prüfenden Gegenstände 5 dargestellt ist, ist es ohne weiteres denkbar, dass diese Gasbarriere-Schicht 5b als eine Zwischenschicht zwischen zwei Grundschichten 5a aus einem anderen Material (oder aus mehreren anderen Materialien) ausgebildet ist. Ausserdem sind ohne weiteres auch Lösungen denkbar, wo nicht nur eine sondern mehrere Gasbarriere-Schichten 5b vorgesehen sind.

Wie in Figur 2 gesehen werden kann, werden die zu prüfenden mit einer Gasbarriere-Schicht versehenen Gegenstände 5 durch die Infrarotstrahlung St, hier schematisch durch gerade Linien dargestellt, bestrahlt. Diese Infrarotstrahlung wird danach von den mit einer Gasbarriere-Schicht versehenen Gegenständen 5 reflektiert, so dass anschliessend ein Abbild von jedem Gegenstand 5 durch das ebenfalls dargestellte Bildverarbeitungsmodul 6 gemacht werden kann. Das Material des Gegenstandskörpers (bzw. der Grundschicht) 5a und das Material der Gasbarriere-Schicht 5b können insbesondere derart gewählt werden, dass sie nach der Bestrahlung durch die Infrarotstrahlung St ein unterschiedliches Bild ergeben.

Beispielsweise kann das erste Material der Grundschicht 5a derart gewählt werden, dass es eine Reaktion in einem bestimmten Wellenlängenbereich (z.B. bei 820 nm) ergibt, während ein anderer Wellenlängenbereich (beispielsweise in der Gegend von 890 nm) durch das Material der Gasbarriere-Schicht 5b ausgestrahlt wird. Konkret widerspiegeln sich diese unterschiedlichen Reaktionen normalerweise durch unterschiedliche Transparenz der einzelnen Schichten. Es hat sich zum Beispiel gezeigt, dass Schichten aus EVOH-Copolymeren bei Wellenlängen zwischen ungefähr 2850 und 3000 nm eine sehr geringe Transparenz aufweisen (ca. unter 15%), während Polypropylen und Polyethilen in diesem Bereich noch sehr transparent sind (ca. über 80%). Erst bei grösseren Wellenlängen (bei ca. 3200 nm für Polyethilen bzw. bei ca. 3300 nm für Polypropylen) fällt auch die Transparenz der übrigen Kunststoff-Schichten unter den Wert von 5%. Durch eine gezielte Bestrahlung können dann die einzelnen Schichten leicht detektiert werden, wobei anzumerken ist, dass auch andere Wellenlängenbereiche verwendet werden können. So kann beispielsweise auch gezeigt werden, dass EVOH-Schichten bei Wellenlängen ab ca. 6700 nm im Vergleich zu den Polyethilen- bzw. Polypropylen-Schichten wieder eine viel geringere Transparenz aufweisen.

Eine Auswertung des Abbilds des Gegenstands 5 durch das Verarbeitungsmodul 7 kann dann durch das Vorhandensein oder das Fehlen der Reaktion in vorbestimmten Wellenlängenbereichen (also zum Beispiel auf Grund der unterschiedlichen Transparenz) sehr einfach darauf schliessen, ob die jeweiligen Materialien vorhanden sind, oder ob allenfalls Bereiche in den Gegenständen 5 keine Gasbarriere-Schicht aufweisen. Auf diese Weise kann die Kontrolle der Gasbarriere-Schicht 5b sehr effizient, einfach und zuverlässig durchgeführt werden. Da zudem die Auswertungsalgorithmen bei einer solchen Auswertung einfach gehalten werden können, kann auch eine sehr hohe Prüfgeschwindigkeit erreicht werden, wodurch die Effizienz des ganzen Systems gesteigert werden kann.

In Figur 4 wird entsprechend der Abbildung in Figur 2 ein Ausschnitt aus dem System S2 gemäss der zweiten Ausführungsform der vorliegenden Erfindung gezeigt. Im Gegensatz zum System S1 werden die zu prüfenden mit einer Gasbarriere-Schicht versehenen Gegenstände 5 im System S2 nicht durch die externe Infrarotstrahlung St bestrahlt sondern es wird ein Wärmeelement 10 zur Verfügung gestellt, mittels welchem die zu prüfenden mit einer Gasbarriere-Schicht versehenen Gegenstände 5 erwärmt werden können. Die Wärme H wird in Figur 4 schematisch durch die Wellenlinien angedeutet, welche aus dem Wärmeelement 10 nach oben steigen. Durch die Erwärmung der zu prüfenden mit einer Gasbarriere-Schicht versehenen Gegenständen 5 entwickeln diese nämlich eine Eigenstrahlung im Infrarotbereich. Dieses Phänomen wird bereits bei den sogenannten Wärmekameras verwendet, welche beispielsweise zur Auswertung der Energieeffizienz von Gebäuden eingesetzt werden. Auch in diesem Fall macht man sich die Tatsache zu Nutze, dass unterschiedliche Materialien unterschiedliche Eigenstrahlungen entwickeln, insbesondere dass verschiedene Materialien Strahlungen mit unterschiedlichen Wellenlängen produzieren. Wenn das Material der Grundschicht 5a des Gegenstands 5 und das Material der Gasbarriere-Schicht 5b nicht übereinstimmen, werden also durch das Bildaufnahmemodul 6 unterschiedliche Wellenlängen festgestellt, wodurch wiederum die fehlerhaften Gegenstände 5 durch das Verarbeitungsmodul 7 sehr leicht entdeckt werden können.

Abgesehen von den oben beschriebenen Merkmalen funktionieren die Systeme S1 und S2 gemäss den beiden Ausführungsformen der vorliegenden Erfindung in vieler Hinsicht wie die herkömmlichen Systeme zur Prüfung von Werkstücken, bei welchen Kameras im sichtbaren Lichtbereich eingesetzt werden. Deswegen werden die entsprechenden Details an dieser Stelle ausgelassen, da sie durch Fachleute sehr einfach nachvollzogen werden können.

Es soll hier jedoch angedeutet werden, dass die vorliegenden Erfindung nicht auch die beschriebenen Ausführungsformen beschränkt ist. Einem Fachmann wird ohne weiteres klar sein, dass Weiterentwicklungen und Abänderungen im Rahmen der geschützten Erfindung ohne weiteres möglich sind. So können beispielsweise Systemelemente je nach Bedarf durch andere Elemente ausgetauscht werden, welche die gleichen oder aber ähnlichen Funktionen erfüllen. Ebenfalls können zusätzliche Einrichtungen und/oder Elemente vorgesehen werden, zum Beispiel können auch mehrere Bildaufnahmeeinheiten vorgesehen werden, dank welchen die zu prüfenden Gegenstände von verschiedenen Seiten aufgenommen werden können. Auch kann eine Kombination der externen Bestrahlung und Erwärmung verwendet werden, um aussagekräftigere Abbilder zu erhalten. Schliesslich wäre es auch durchaus denkbar, die oben beschriebene Kontrolle im Bereich des unsichtbaren Lichts mit einer herkömmlichen Kontrolle im Bereich des sichtbaren Lichts miteinander zu verbinden, um eine vollständige Prüfung der Prüfstücke mit einer einzigen Anlage durchführen zu können. Solche Massnahmen und Elemente fallen jedoch in den Schutzbereich der Erfindung, welcher durch die nachfolgenden Patentansprüche definiert wird.

## Patentansprüche

1. Verfahren zum Prüfen von mit einer Gasbarriere-Schicht versehenen Gegenständen (5), welche aus mindestens einer Grundschicht (5a) aus einem ersten Material und mindestens einer Gasbarriere-Schicht (5b) aus einem zweiten Material bestehen, wobei mittels eines Bildaufnahmemoduls (6) ein Abbild von jedem Gegenstand (5) aufgenommen und durch ein Verarbeitungsmodul (7) derart verarbeitet wird, dass defekte Gegenstände (5) entdeckt und ausgeschieden werden,
**dadurch gekennzeichnet,**
**dass** durch das Bildaufnahmemodul (6) das Abbild jedes Gegenstandes (5) im Bereich des unsichtbaren Lichts gemacht wird, und
**dass** das aufgenommene Abbild durch das Verarbeitungsmodul (7) untersucht wird, wobei das Vorhandensein, das Fehlen oder die Dicke der Gasbarriere-Schicht (5b) auf Grund des Abbilds ermittelt wird.

2. Verfahren nach Anspruch 1, **dadurch gekennzeichnet, dass** das erste Material der Grundschicht (5a) und das zweite Material der Gasbarriere-Schicht (5b) derart ausgewählt werden, dass sie im Bereich des unsichtbaren Lichts ein unterschiedliches Abbild ergeben.

3. Verfahren nach Anspruch 1 oder 2, **dadurch gekennzeichnet, dass** das Abbild des Gegenstands (5) auf vorbestimmte Wellenlängen untersucht wird, wobei diese Wellenlängen in Abhängigkeit vom ersten Material der Grundschicht (5a) und vom zweiten Material der Gasbarriere-Schicht (5b) ausgewählt werden.

4. Verfahren nach einem der Ansprüche 1 bis 3, **dadurch gekennzeichnet, dass** das Bildaufnahmemodul (6) eine im Bereich der Infrarotstrahlung sensible Kamera ist.

5. Verfahren nach einem der Ansprüche 1 bis 4, **dadurch gekennzeichnet, dass** beim Ermitteln eines fehlerhaften Gegenstands (5) dieser Gegenstand (5) durch ein Aussonderungsmodul (8) aufgrund eines Signals vom Verarbeitungsmodul (7) ausgesondert wird.

6. Verfahren nach einem der Ansprüche 1 bis 5, **dadurch gekennzeichnet, dass** die Gegenstände (5) durch eine Fördereinrichtung (2) vor dem Bildaufnahmemodul (6) derart transportiert werden, dass ein Abbild von jedem Gegenstand (5) aufgenommen wird.

7. Verfahren nach einem der Ansprüche 1 bis 6, **dadurch gekennzeichnet, dass** ein Bestrahlungselement (9) vorgesehen ist, mittels welchem die Gegenstände (5) durch die Infrarotstrahlung (St) bestrahlt werden.

8. Verfahren nach einem der Ansprüche 1 bis 7, **dadurch gekennzeichnet, dass** ein Wärmeelement (10) vorgesehen ist, mittels welchem die Gegenstände (5) derart erwärmt werden, dass sie eine Eigenstrahlung im Infrarotbereich entwickeln.

9. Verfahren nach einem der Ansprüche 1 bis 8, **dadurch gekennzeichnet, dass** das erste Material der Grundschicht (5a) Polypropylen und/oder Polyethylen bzw. das zweite Material der Gasbarriere-Schicht (5b) das Ethylenvinylacetat (EVA) und/oder Ethylen-Vinylalkohol-Copolymer (EVOH).

10. System zum Prüfen von mit einer Gasbarriere-Schicht versehenen Gegenständen (5), welche aus mindestens einer Grundschicht (5a) aus einem ersten Material und mindestens einer Gasbarriere-Schicht (5b) aus einem zweiten Material bestehen, wobei mittels eines Bildaufnahmemoduls (6) ein Abbild von jedem Gegenstand (5) aufgenommen und durch ein Verarbeitungsmodul (7) derart verarbeitet ist, dass defekte Gegenstände (5) entdeckbar und ausscheidbar sind,
**dadurch gekennzeichnet, dass**
das System ein Bildaufnahmemodul (6) und ein Verarbeitungsmodul (7) umfasst, wobei durch das Bildaufnahmemodul (6) ein Abbild jedes Gegenstandes (5) im Bereich des unsichtbaren Lichts aufnehmbar ist, und das aufgenommene Abbild durch das Verarbeitungsmodul (7) untersuchbar ist, wobei das Vorhandensein, das Fehlen oder die Dicke der Gasbarriere-Schicht (5b) auf Grund des Abbilds ermittelbar ist.

11. System nach Anspruch 10, **dadurch gekennzeichnet, dass** das erste Material der Grundschicht (5a) und das zweite Material der Gasbarriere-Schicht (5b) derart ausgewählt sind, dass sie im Bereich des unsichtbaren Lichts ein unterschiedliches Abbild ergeben.

12. System nach Anspruch 10 oder 11, **dadurch gekennzeichnet, dass** das Bildaufnahmemodul (7) eine im Bereich der Infrarotstrahlung sensible Kamera ist.

13. System nach einem der Ansprüche 10 bis 12, **dadurch gekennzeichnet, dass** es ein Aussonderungsmodul (8) umfasst, mittels welchem fehlerhafte Gegenstände (5) aufgrund eines Signals vom Verarbeitungsmodul (7) aussonderbar sind.

14. System einem der Ansprüche 10 bis 13, **dadurch gekennzeichnet, dass** es ein Bestrahlungselement (9) umfasst, mittels welchem die Gegenstände (5) durch die Infrarotstrahlung (St) bestrahlbar sind.

15. System nach einem der Ansprüche 10 bis 14, **dadurch gekennzeichnet, dass** es ein Wärmeelement (10) umfasst, mittels welchem die Gegenstände (5) derart erwärmbar sind, dass sie eine Eigenstrahlung im Infrarotbereich entwickeln.
